# FASCICULE DE BREVET EUROPEEN

(11) **EP 0 740 048 B1**
(45) Date de publication et mention de la délivrance du brevet: **01.08.2001**
(21) Numéro de dépôt: 96400776.9
(22) Date de dépôt: 10.04.1996
(51) Int. Cl.: E21B 37/06

(54) **Procédé pour inhiber ou retarder la formation la croissance et/ou l'agglomération des hydrates dans les effluents de production**
Verfahren zum Inhibieren oder Hemmen der Formation, des Wachs und/oder der Agglomerierung von Hydraten in Produktionsabflüssen
Process for inhibiting or delaying the formation, the growth and/or the agglomeration of hydrates in production effluents

(30) Priorité: 26.04.1995 FR 9505099
(43) Date de publication de la demande: 30.10.1996
(73) Titulaire: INSTITUT FRANCAIS DU PETROLE, 92502 Rueil-Malmaison (FR)
(72) Inventeur: Delion, Anne Sophie, 75015 Paris (FR); Durand, Jean-Pierre, 78400 Chatou (FR); Gateau, Patrick, 78310 Maurepas (FR); Velly, Marie, 75020 Paris (FR)

(56) Documents cités:
- EP-A- 0 323 774
- EP-A- 0 582 507
- EP-A- 0 594 479

## Description

L'invention concerne un procédé pour inhiber ou retarder la formation, la croissance ou/et l'agglomération des hydrates de gaz naturel, de gaz de pétrole ou d'autres gaz, par utilisation d'au moins un additif. Les gaz qui forment des hydrates peuvent notamment comprendre au moins un hydrocarbure choisi parmi le méthane, l'éthane, l'éthylène, le propane, le propène, le n-butane et l'iso-butane, et éventuellement de l'H₂S et/ou du CO₂.

Ces hydrates se forment lorsque l'eau se trouve en présence de gaz, soit à l'état libre, soit à l'état dissous dans une phase liquide, telle qu'un hydrocarbure liquide, et lorsque la température atteinte par le mélange notamment d'eau, de gaz et éventuellement d'hydrocarbures liquides, tels que de l'huile, devient inférieure à la température thermodynamique de formation des hydrates, cette température étant donnée pour une composition des gaz connue et lorsque leur pression est fixée.

La formation d'hydrates peut être redoutée, notamment dans l'industrie pétrolière et gazière, pour lesquelles les conditions de formation d'hydrates peuvent être réunies. En effet, pour diminuer le coût de production du pétrole brut et du gaz, tant au point de vue des investissements qu'au point de vue de l'exploitation, une voie envisagée, notamment en production en mer, est de réduire, voire de supprimer, les traitements appliqués au brut ou au gaz à transporter du gisement à la côte et notamment de laisser toute ou une partie de l'eau dans le fluide à transporter. Ces traitements en mer s'effectuent en général sur une plate-forme située en surface à proximité du gisement, de manière que l'effluent, initialement chaud, puisse être traité avant que les conditions thermodynamiques de formation des hydrates ne soient atteintes du fait du refroidissement de l'effluent avec l'eau de mer.

Cependant, comme cela arrive pratiquement, lorsque les conditions thermodynamiques requises pour former des hydrates sont réunies, l'agglomération des hydrates entraîne le blocage des conduites de transport par création de bouchons qui empêchent tout passage de pétrole brut ou de gaz.

La formation de bouchons d'hydrates peut entraîner un arrêt de la production et provoquer ainsi des pertes financières importantes. De plus, la remise en service de l'installation, surtout s'il s'agit de production ou de transport en mer, peut être longue, car la décomposition des hydrates formés est très difficile à réaliser. En effet, lorsque la production d'un gisement sous-marin de gaz naturel ou de pétrole et de gaz comportant de l'eau atteint la surface du sol marin et est ensuite transportée au fond de la mer, il arrive, par l'abaissement de la température de l'effluent produit, que les conditions thermodynamiques soient réunies pour que des hydrates se forment, s'agglomèrent et bloquent les conduites de transfert. La température au fond de la mer peut être, par exemple, de 3 ou 4°C.

Des conditions favorables à la formation d'hydrates peuvent aussi être réunies de la même façon à terre, pour des conduites pas (ou pas assez profondément) enfouies dans le sol terrestre, lorsque par exemple la température de l'air ambiant est froide.

Pour éviter ces inconvénients, on a cherché, dans l'art antérieur, à utiliser des produits qui, ajoutés au fluide, pourraient agir comme inhibiteurs en abaissant la température thermodynamique de formation des hydrates. Ce sont notamment des alcools, tels que le méthanol, ou des glycols, tels que le mono- le di- ou le tri-éthylèneglycol. Cette solution est très onéreuse car la quantité d'inhibiteurs à ajouter peut atteindre 10 à 40 % de la teneur en eau et ces inhibiteurs sont difficiles à récupérer complètement.

On a également préconisé l'isolation des conduites de transport, de manière à éviter que la température du fluide transporté n'atteigne la température de formation des hydrates dans les conditions opératoires. Une telle technique est, elle aussi, très coûteuse.

On a encore décrit l'utilisation d'additifs capables de modifier le mécanisme de formation des hydrates, puisque au lieu de s'agglomérer rapidement les uns aux autres et de former des bouchons, les hydrates formés se dispersent dans le fluide sans s'agglomérer et sans obstruer les conduites. On peut citer, à cet égard : la demande de brevet EP-A-323774 au nom de la demanderesse, qui décrit l'utilisation de composés amphiphiles non-ioniques choisis parmi les esters de polyols et d'acides carboxyliques, substitués ou non-substitués, et les composés à fonction imide ; la demande de brevet EP-A-323775, également au nom de la demanderesse, qui décrit notamment l'utilisation de composés appartenant à la famille des diéthanolamides d'acides gras ou de dérivés d'acides gras ; le brevet US-A-4956593 qui décrit l'utilisation de composés tensio-actifs tels que des phosphonates organiques, des esters phosphates, des acides phosphoniques, leurs sels et leurs esters, des poly-phosphates inorganiques et leurs esters, ainsi que des polyacrylamides et des polyacrylates ; et la demande de brevet EP-A-457375, qui décrit l'utilisation de composés tensio-actifs anioniques, tels que les acides alkylarylsulfoniques et leurs sels de métaux alcalins.

Des composés amphiphiles obtenus par réaction d'au moins un dérivé succinique choisi dans le groupe formé par les acides et les anhydrides polyalkénylsucciniques sur au moins un monoéther de polyéthylèneglycol ont également été proposés pour réduire la tendance à l'agglomération des hydrates de gaz naturel, de gaz de pétrole ou d'autres gaz (demande de brevet EP-A-582507).

Par ailleurs, on a également préconisé l'utilisation d'additifs capables d'inhiber ou de retarder la formation et/ou la croissance des hydrates. On peut citer à cet égard la demande de brevet EP-A-536950, qui décrit l'utilisation de dérivés de la tyrosine, et la demande internationale WO-A-9325798, qui décrit l'utilisation de composés polymères et copolymères de la N-vinyl 2 pyrrolidone et leurs mélanges.

On a maintenant découvert que des copolymères hydrosolubles, contenant des motifs hydrophiles et des motifs hydrophobes permettent, à de faibles concentrations, d'inhiber ou de retarder la formation, la croissance et/ou l'agglomération des hydrates de gaz naturel, de gaz de pétrole ou d'autres gaz.

Ainsi, l'invention propose un procédé pour inhiber ou retarder la formation, la croissance et/ou l'agglomération des hydrates au sein d'un fluide comprenant de l'eau et un gaz, dans des conditions où des hydrates peuvent se former (à partir d'eau et de gaz), caractérisé en ce qu'on incorpore audit fluide au moins un copolymère hydrosoluble à motifs hydrophiles (Hy) et hydrophobes (Hb) dans lesquels les motifs hydrophobes représentent de 0,5 à 70% en masse.

Les copolymères hydrosolubles considérés dans l'invention peuvent correspondre à la structure (I) définie ci-après comme étant du type :

D'autres composés, en particulier des polymères ou copolymères d'oxyde d'alkylène hydrosolubles, en mélange avec des inhibiteurs thermodynamiques de formation d'hydrates, ont également été proposés dans la demande de brevet EP-A-594479 pour réduire la tendance à l'agglomération des hydrates de gaz naturel ou de gaz de pétrole, en particulier dans le cas où le fluide à transporter contient une proportion d'eau relativement élevée (par exemple d'au moins 30 % en masse).

Hb - A - chaîne hydrophile Hy - A - Hb (I)

Dans la structure (I), la chaîne hydrophile (Hy) est constituée d'une chaîne de polyoxyalkylène ayant globalement la formule suivante: 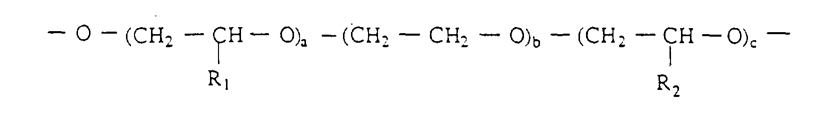 où R₁ et R₂ représentent chacun un atome d'hydrogène ou un radical alkyle de 1 à 30 atomes de carbone; a et c peuvent prendre chacun une valeur de 0 à 50, b est inférieur ou égal à 750, avec (a + b + c) non nul et b suffisamment élevé pour que ledit copolymère soit hydrosoluble. A titre indicatif, la teneur en oxyde d'éthylène dans ces copolymères (liée à la valeur de b) sera par exemple supérieure à environ 20 % en masse.

Les groupements hydrophobes (Hb) sont chacun un radical alkyle de 2 à 30 atomes de carbone, un radical cycloalkyle de 6 à 30 atomes de carbone, un radical phényle éventuellement substitué par un, deux ou trois radicaux alkyles de 1 à 30 atomes de carbone.

Lles groupements A reliant les groupements hydrophobes (Hb) à la chaine hydrophile (Hy) peuvent être définis comme renfermant au moins une fonction uréthane, les groupements pouvant alors être par exemple de la forme :

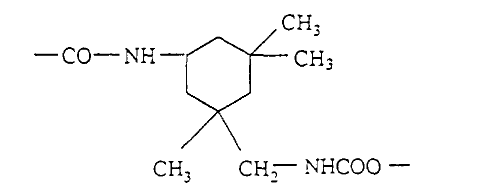

―CO―NH―(CH₂)₆― NH ― COO ―

ou 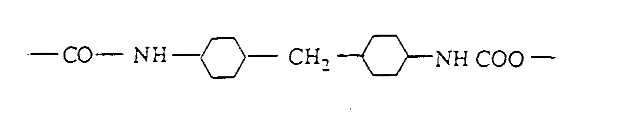 Les copolymères correspondant à la structure (I) définie ci-dessus peuvent être par exemple obtenus par modification de polyoxyalkylène par un di-isocyanate, suivie de la modification du produit obtenu par un alkyl-phénol.

Une seconde structure pour les copolymères considérés dans l'invention est la structure (II) définie ci-après comme étant un copolymère de type (Hb) - (Hy) avec une répartition statistique des motifs hydrophiles et hydrophobes, dans lequel
- les motifs hydrophiles (Hy) répondent à la formule générale : 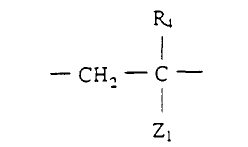 dans laquelle R₄ représente un atome d'hydrogène ou un radical méthyle et Z₁ un groupement - CO NH₂ ; et
- les motifs hydrophobes (Hb) répondent à la formule générale : 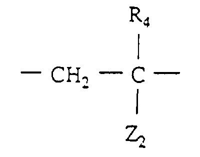 dans laquelle R₄ représente un atome d'hydrogène ou un radical méthyle, Z₂ représente un groupement COOR'₁, CONHR'₁ ou CONR'₁R'₂, R'₁ et R'₂ représentant chacun un radical alkyle de 2 à 30 atomes de carbone, ou un groupement aryle ou alkyl - aryle de 6 à 30 atomes de carbone.

Les copolymères de structure (II) dériveront le plus souvent d'un monomère hydrophile choisi parmi l'acrylamide, le méthacrylamide, et d'un monomère hydrophobe choisi parmi les acrylates et méthacrylates d'alkyle et les acrylamides et méthacrylamides N-alkyl substitués ou N,N - dialkyl substitués.

Les copolymères de structure (II) décrite ci-dessus peuvent avoir une masse moléculaire moyenne en poids de 10.000 à 10.000.000.

Les copolymères considérés dans l'invention peuvent encore correspondre à la structure (III) définie ci-après comme étant du type (Hb)-(Hy) avec une répartition statistique des motifs hydrophiles et des motifs hydrophobes et répondant à la formule générale : 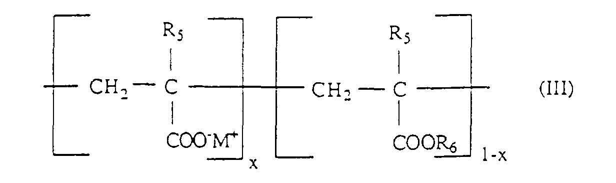 dans laquelle R₅ représente un atome d'hydrogène ou un radical méthyle, M⁺ un proton H⁺ ou un cation alcalin ou ammonium, R₆ est un radical alkyle de 2 à 6 atomes de carbone et x prend par exemple une valeur de 0,4 à 0,8.

Ces copolymères peuvent dériver de la polymérisation radicalaire des monomères éthyléniques : acide (méth)acrylique / (méth)acrylate d'alkyle en proportions appropriées, l'acide (méth)acrylique pouvant être neutralisé par un hydroxyde alcalin ou l'ammoniac.

Les copolymères correspondant aux structures (II) et (III) sont préparés selon les procédés connus de copolymérisation radicalaire, en solution, en émulsion, ou en suspension d'un mélange des monomères précités, en présence de systèmes catalytiques usuels pour ce type de polymérisation et éventuellement d'agents de transfert.

La masse moléculaire dudit copolymère est ajustée par les moyens classiques tels que : température, taux de catalyseur, présence d'un agent de transfert ou tout autre moyen ou combinaison de moyens connus de l'homme de l'art, et se situe entre 10.000 et 10.10⁶. (masse moléculaire moyenne en poids).

Enfin, les copolymères hydrosolubles à motifs hydrophiles et hydrophobes considérés dans l'invention peuvent correspondre à la structure (IV) du type (Hb)-(Hy) avec une répartition statistique des motifs hydrophiles et des motifs hydrophobes et dont les motifs hydrophiles (Hy) répondent à la formule générale: 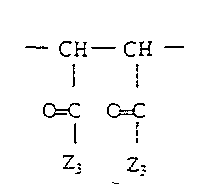 dans laquelle Z₃ représente un groupement OH ou une chaîne monomer de polyoxyalkylène -O-(CH₂-CH₂-O)ₘ CH₃ avec m par exemple de 6 à 10 et de motifs hydrophobes (Hb) répondent à au moins l'une des formules générales: 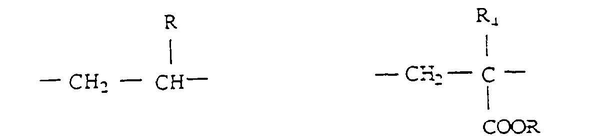 dans lesquelles R représente un radical alkyle de 1 à 30 atomes de carbone et R₄ est défini comme précédemment.

En général, les copolymères hydrosolubles à motifs hydrophiles et hydrophobes considérés dans l'invention sont présentés sous la forme de solutions aqueuses alcalines, de telle manière que les fonctions acides carboxyliques présentes soient neutralisées.

Dans le procédé de l'invention, les copolymères tels que décrits ci-dessus sont ajoutés dans le fluide à traiter à des concentrations allant en général de 0.05 à 5 % en masse, de préférence de 0,1 à 2 % en masse, par rapport à l'eau.

L'invention sera mieux comprise à la lecture des expérimentations suivantes, nullement limitatives, menées en présence d'hydrates de THF (exemple 1) et d'hydrates de méthane (exemples 2 à 6).

Les copolymères testés dans les exemples sont définis ci-après :

### Copolymère H1

Le copolymère H1 correspond à la structure (I) décrite plus haut et à la formulation suivante :
- partie hydrophile : (CH₂CH₂O)_{b} avec b voisin de 600
- partie hydrophobe : nonylphényle de formule C₉H₁₉-C₆H₄-
- partie uréthane de liaison de Hb sur Hy :

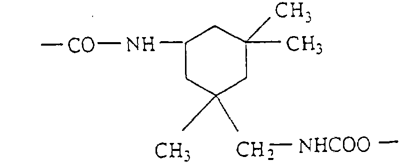

La masse moléculaire en poids de ce polymère est d'environ 30.000.

### Copolymère H2

H2 est un copolymère acide acrylique/méthacrylate de nonyle contenant sensiblement 1 % en masse d'acrylate de nonyle et répond à la formule générale suivante : 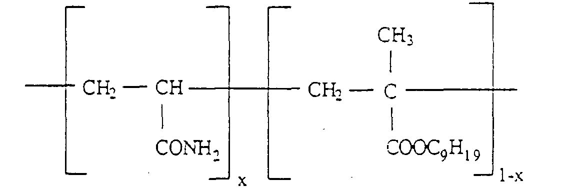 x prenant alors la valeur 0,99.

La masse moléculaire en poids de ce polymère est d'environ 8.10⁶.

### Copolymère H3

H3 est un copolymère acide acrylique/acrylate de butyle contenant sensiblement 45% en mole d'acrylate de butyle et a la formule générale suivante : 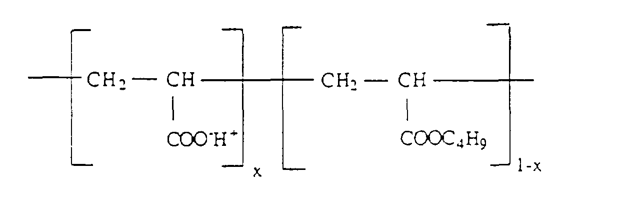 x prenant alors la valeur 0,55.

Le copolymère H3 a une masse moléculaire en poids d'environ 8.10⁶.

### Copolymère H4

Le copolymère de structure H4, comporte des motifs anhydrides carboxyliques partiellement estérifiés dont les groupements esters hydrophiles sont de type polyoxyéthylène et des motifs à chaîne latérale hydrophobe répondant respectivement aux formules : 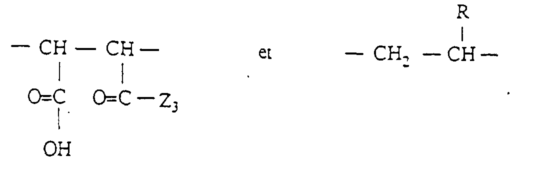 où R est une chaîne alkyle de 12 à 14 atomes de carbone et Z₃ est -O-(-CH₂-CH₂-O-)ₘ-CH₃, avec m de 6 à 10.

La masse moléculaire en poids est d'environ 20.000.

### Exemple 1

Afin d'alléger la procédure expérimentale de présélection des additifs, les essais ont été menés dans un premier temps en présence d'hydrates de THF. Une solution à 20 % en masse de THF forme des hydrates sous pression atmosphérique à 4°C.

Le dispositif utilisé est constitué de tubes de diamètre 16 mm, dans lesquels sont introduits 8 ml d'une solution aqueuse à 20 % en masse de THF contenant éventuellement l'additif à tester. On introduit dans chaque tube une bille en inox d'un diamètre de 8 mm, afin d'inhiber la formation des hydrates. Les tubes sont placés sur un agitateur rotatif, qui tourne à 20 tours/min. Ce dernier est placé dans une enceinte réfrigérée à 1°C.

Le principe de ce test est de déterminer le temps de latence précédant la formation des hydrates, et le temps mis, après formation des hydrates, pour bloquer la bille introduite dans le tube, ce qui simule la formation d'un bouchon. Le temps de latence correspond au temps mesuré entre le moment où les tubes sont introduits dans l'enceinte réfrigérée et le moment où on observe la formation des hydrates (apparition d'un trouble).

Chaque série de tests est menée par comparaison avec un mélange de référence ne contenant pas d'additif, et les temps de latence et de blocage fournis pour un additif correspondent à la moyenne des temps mesurés sur six essais.

L'addition de 0,5 % en masse des copolymères à motifs hydrophiles et hydrophobes selon l'invention induit, dans les conditions opératoires mises en oeuvre, une forte augmentation du temps de latence précédant la formation des hydrates. Les résultats présentés dans le tableau 1 démontrent l'effet inhibiteur des additifs testés :

**Tableau 1**

| Inhibiteur | Concentration % en pds par rapport à l'eau | Masse moléculaire | ∗Temps de latence (mn) | ∗Temps de blocage (mn) |
|---|---|---|---|---|
| eau désionisée | ---- | ---- | 39 | 58 |
| H1 | 0,5 | 27.10³ | 160 | 185 |
| H2 | 0,5 | 8.10⁶ | 270 | 295 |
| H3 | 0,5 | 8.10⁶ | > 420 | > 420 |
| H4 | 0,5 | 20.10³ | 220 | 250 |

### Exemple 2 (comparatif)

Différents additifs sortant du cadre de l'invention ont été testés à titre de comparaison dans les conditions précédemment décrites :
polyvinylpyrrolidone (masse moléculaire 10000 à 700000 ; 0,5 % en masse)
L. tyrosine (300 ppm)
Phénylalanine (300 ppm)
Polyacrylamide (masse moléculaire : 8 M ; 0,5 % en masse)
Acide polyacrylique (masse moléculaire : 5000 ; 0,5 % en masse)
Carboxyméthyl cellulose (0,5 % en masse)

Aucun de ces additifs n'augmente notablement, dans les conditions de tests mises en oeuvre, le temps d'induction précédant la formation des hydrates, ni le temps de blocage de la bille présente dans les tubes.

### Exemples 3 à 7

Pour tester l'efficacité des produits utilisés dans le procédé de l'invention, en présence d'hydrates de méthane, on a simulé le transport de fluides formant des hydrates tels que des effluents pétroliers : on a procédé à des essais de formation d'hydrates à partir de gaz, d'eau et de condensat, à l'aide de l'appareillage décrit ci-après.

L'appareillage comporte une boucle de 6 mètres constituée de tubes de diamètre intérieur égal à 7,7 mm, un réacteur de 2 litres comprenant une entrée et une sortie pour le gaz, une aspiration et un refoulement pour le mélange eau, condensat et additif initialement introduit. Le réacteur permet de mettre la boucle sous pression. Des tubes de diamètre analogue à ceux de la boucle assurent la circulation des fluides de la boucle au réacteur, et inversement, par l'intermédiaire d'une pompe à engrenages placée entre les deux. Une cellule saphir intégrée dans le circuit permet une visualisation du liquide en circulation et donc des hydrates s'ils se sont formés.

Pour déterminer l'efficacité des additifs selon l'invention, on introduit des fluides (eau, condensat, additif) dans le réacteur. L'installation est ensuite portée sous une pression de 7 MPa. L'homogénéisation des liquides est assurée par leur circulation dans la boucle et le réacteur, puis uniquement dans la boucle. La pression est maintenue constante par apport de gaz, et on impose une rapide diminution de la température (10°C/mn) de 17°C à 8°C, qui correspond à la température expérimentale choisie.

Le principe de ces essais est de déterminer le temps de latence précédant la formation des hydrates, et les augmentations de perte de charge enregistrées à l'issue de leur formation. Le temps de latence, correspond au temps mesuré entre le début du test (circulation des fluides à 17°C) et la détection de la formation des hydrates (exothermie, forte consommation en gaz). La durée des tests peut varier de quelques minutes à plusieurs heures : un additif performant inhibe la formation des hydrates, ou les maintient dispersés dans les fluides pendant plusieurs heures.

### Exemple 3 (comparatif)

Dans cet exemple, on opère avec un fluide composé en volume de 80 % d'eau et de 20 % de condensat. La composition du condensat est essentiellement un mélange d'hydrocarbures de 10 à 15 atomes de carbone. Le gaz utilisé comprend en volume 98 % de méthane et 2 % d'éthane.

Dans ces conditions, on observe la formation des hydrates 30 mn après le début du test, induisant une forte augmentation de la perte de charge et la formation d'un bouchon immédiat dans le serpentin.

### Exemple 4 (comparatif)

Dans cet exemple, on opère comme dans l'exemple 3 avec le même fluide, le même gaz, et à la même pression, mais on ajoute au fluide de circulation 0,5 % en masse par rapport à l'eau de polyvinylpyrrolidone de masse moléculaire en poids de 700 000.

Dans ces conditions, on observe un temps de latence de 1 heure, suivi d'un blocage immédiat du serpentin.

### Exemple 5

Dans cet exemple, on opère comme dans l'exemple 3 avec le même fluide, le même gaz, et à la même pression, mais on ajoute au fluide de circulation 0,5 % en masse par rapport à l'eau du copolymère H3. Dans ces conditions, on n'observe pas de formation d'hydrates pendant plus de 24 heures.

### Exemple 6

Dans cet exemple, on opère comme dans l'exemple 5 en utilisant 0,5 % en masse par rapport à l'eau du copolymère H1.

Dans ces conditions, on observe un temps de latence de 3 h 30. La formation des hydrates induit une augmentation de la perte de charge, et la formation d'un bouchon n'interviennent qu'après une heure de circulation de la suspension d'hydrates.

### Exemple 7

Toutes choses égales par ailleurs, on répète l'exemple 6 en utilisant 0,5 % en masse par rapport à l'eau, du copolymère H4. Dans ces conditions, on observe un temps de latence de 5 heures, et la formation d'un bouchon dans les conduites 1 h 30 après leur formation.

## Revendications

1. Procédé pour inhiber la formation, la croissance et/ou l'agglomération des hydrates au sein d'un fluide comprenant au moins de l'eau et un gaz, dans des conditions thermodynamiques telles que des hydrates puissent se former à partir d'eau et de gaz, dans lequel on incorpore audit fluide au moins un additif choisi parmi les copolymères hydrosolubles, caractérisé en ce que ledit copolymère hydrosoluble contient des motifs hydrophiles et des motifs hydrophobes et est choisi parmi
- les copolymères de structure
Hb-A-chaîne hydrophile-A-Hb (I)
dans laquelle
• la chaîne hydrophile est constituée d'une chaîne de polyoxyalkylène répondant à la formule générale : 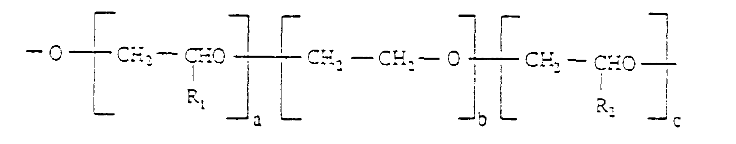 où R₁ et R₂ sont chacun un atome d'hydrogène ou un radical alkyle del à 30 atomes de carbone, a et c prennent chacun une valeur de 0 à 50, b est inférieur ou égal à 750, a+b+c étant non nul, b étant suffisamment élevé pour que ledit copolymère soit hydrosoluble;
• les groupements hydrophobes (Hb) sont des radicaux alkyles, alkyle-aryles ou cycloalkyles;
• et les groupements hydrophobes (Hb) sont reliés à la chaîne hydrophile par des groupements -A- renfermant au moins une fonction uréthane.
- les copolymères de structure (II) de type (Hb)-(Hy) avec une répartition statistique des motifs hydrophiles (Hy) et des motifs hydrophobes (Hb), dans laquelle
- les motifs hydrophiles (Hy) répondent à la formule générale : 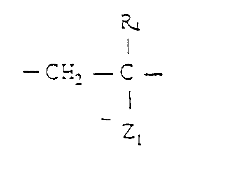 dans laquelle R₄ représente un atome d'hydrogène ou un radical méthyle et Z₁ représente un groupement -CO NH₂ ;
- et les motifs hydrophobes (Hb) répondent à la formule générale : 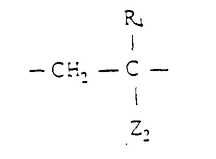 dans laquelle R₄ représente un atome d'hydrogène ou un radical méthyle et Z₂ représente COR'1, CONHR'₁ ou CONR'₁ R'₂, avec R'₁ et R'₂ représentant chacun un radical alkyle de 2 à 30 atomes de carbone, aryle ou alkyl-aryle de 6 à 30 atomes de carbone ;
- les copolymères de structure (III) de type (Hb)-(Hy) avec une répartition statistique des motifs hydrophiles (Hy) et des motifs hydrophobes (Hb) et répondant à la formule générale : 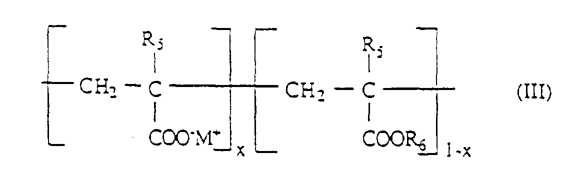 dans laquelle R₅ représente un atome d'hydrogène ou un radical méthyle, M⁺ est un proton H⁺ ou un cation de métal alcalin ou ammonium, R₆ est un radical alkyle de 2 à 6 atomes de carbone et x prend une valeur de 0,4 à 0,8 ;
- et les copolymères de structure (IV) de type (Hy)-(Hb) avec une répartition statistique des motifs hydrophiles (Hy) et des motifs hydrophobes (Hb) et dans laquelle
- les motifs hydrophiles (Hy) répondent à la formule générale : 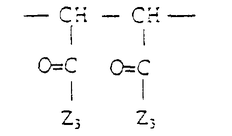 dans lesquelles Z₃ représente un groupement OH ou une chaîne monoéther de polyoxyéthylène;
- et les motifs hydrophobes répondent au moins à l'une des formules générales : 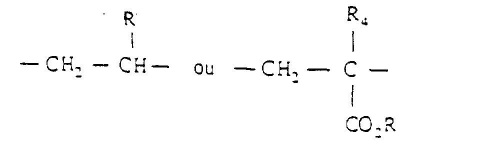 dans lesquelles R représente un radical hydrocarboné alkyle de 1 à 30 atomes de carbone et R⁴ représente un atome d'hydrogène ou un radical méthyle.

2. Procédé selon la revendication 1, caractérisé en ce que, dans les copolymères de structure (I), la teneur en oxyde d'éthylène est d'au moins 20 % en masse.

3. Procédé selon l'une des revendications 1 et 2, caractérisé en ce que dans les copolymères de structure (I) les groupements A à fonctions uréthanes sont de la forme : 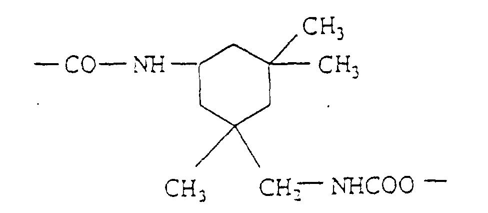
― CO ― NH ― (CH₂)₆ ― NH ― COO―
ou

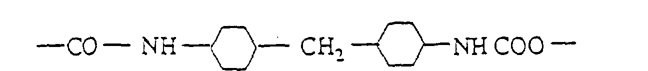

4. Procédé selon l'une des revendications 1 à 3, caractérisé en ce que dans les copolymères de structure (I) le groupement hydrophobe est un radical nonylphényle de formule C₉H₁₉-C₆H₄.

5. Procédé selon l'une des revendications 1 à 4, caractérisé en ce que dans le copolymère hydrosoluble les motifs hydrophobes représentent de 0,5 à 70 % en masse dudit copolymère.

6. Procédé selon l'une des revendications 1 à 5, caractérisé en ce que ledit copolymère est incorporé audit fluide à une concentration de 0,05 à 5 % en masse par rapport à l'eau présente.

7. Procédé selon la revendication 6, caractérisé en ce que ladite concentration est de 0,25 à 2 % en masse par rapport à l'eau présente.

8. Procédé selon l'une des revendications 1 à 7, caractérisé en ce que, dans ledit fluide, ledit gaz comprend au moins un hydrocarbure choisi parmi le méthane, l'éthane, l'éthylène, le propane, le propène, le n-butane, et l'iso-butane, et éventuellement l'H₂S et/ou le CO₂.

9. Procédé selon l'une des revendications 1 à 7, caractérisé en ce que ledit fluide comprend du gaz naturel.

10. Procédé selon l'une des revendications 1 à 7, caractérisé en ce que ledit fluide comprend du gaz de pétrole et au moins un hydrocarbure liquide.

## Claims

1. A process for inhibiting the formation, growth and/or aggregation of hydrates in a fluid comprising at least water and a gas, under thermodynamic conditions in which hydrates can form from the water and the gas, in which at least one additive selected from water-soluble copolymers is incorporated into said fluid, characterized in that said water-soluble copolymers contains hydrophilic and hydrophobic units and is selected among :
- copolymers of the structure :
Hb - A - hydrophilic chain - A - Hb (I)
where
• the hydrophilic chain is constituted by a polyoxyalkylene chain which has the following overall formula : 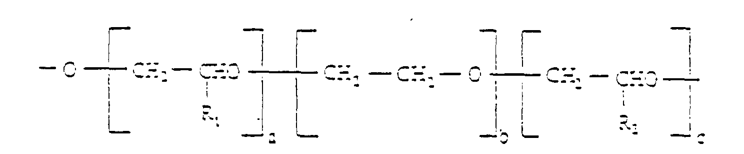 where R₁ and R₂ each represent a hydrogen atom or an alkyl radical containing 1 to 30 carbon atoms; a and c each take a value of 0 to 50, b is less than or equal to 750, (a+b+c) is non zero and b is sufficiently high for the copolymer to be water-soluble;
• the hydrophobic groups (Hb) are alkyl, alkylaryl or cycloalkyl radicals; and
• the hydrophobic groups (Hb) are connected to the hydrophilic chain by A- groups comprising at least one urethane function ;
- copolymers of structure (II) of the type (Hb) - (Hy) with a statistical distribution of hydrophilic (Hy) and hydrophobic (Hb) units, in which
• the hydrophilic units (Hy) have the general formula : 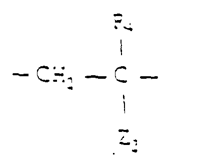 where R₄ represents a hydrogen atoms or a methyl radical and Z₁ represents a -CONH₂ group: and
• the hydrophobic units (Hb) have the general formula: 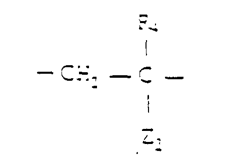 where R₄ represents a hydrogen atom or a methyl radical, Z₂ represents a COR'₁, CONHR'₁ or CONR'₁R'₂, where R'₁ and R'₂ each represent an alkyl radical containing 2 to 30 carbon atoms, or an aryl or alkylaryl group containing 6 to 30 carbon atoms ;
- copolymers of structure (III) of type (Hb)-(Hy) with a statistical distribution of hydrophilic (Hy) and Hydrophobic (Hb) units and with the following general formula: 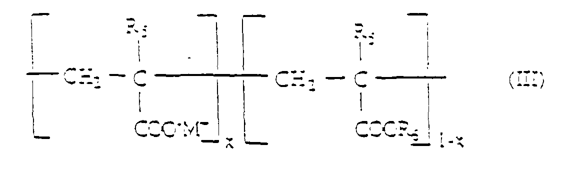 where R₅ represents a hydrogen atom or a methyl radical, M⁺ represents a proton H⁺ or an alkaline or ammonium cation, R₆ is an alkyl radical containing 2 to 6 carbon atoms and x is 0.4 to 0.8 ;
- and copolymers of structure (IV) of type (Hb)-(Hy) with a statistical distribution of hydrophilic (Hy) and hydrophobic (Hb) units and in which
• the hydrophilic units (Hy) have the following general formula : 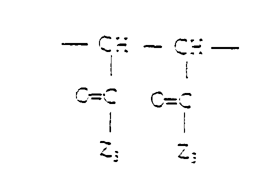 where Z₃ represents an OH group or a polyoxyethylene monoether chain:
• and the hydrophobic units have at least one of the following general formulae : 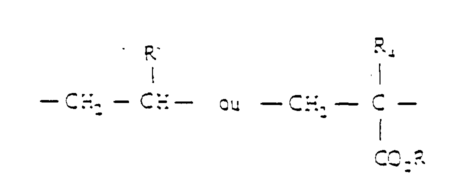 where R represents an alkyl hydrocarbon radical containing 1 to 30 carbon atoms and R₄ represents a hydrogen atom or a methyl radical.

2. A process according to claim 1, characterized in that in the copolymer with structure (I), the ethylene oxide concentration is at least 20% by weight.

3. A process according to any one of claims 1 and 2, characterized in that in the copolymer with structure (I), groups A containing urethane functions have the form: 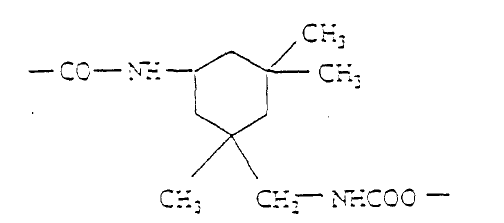
―CO―NH―(CH₂)₆―NH―COO―
ou

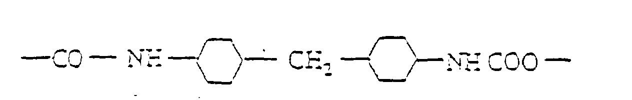

4. A process according to any one of claims 1 to 3, characterized in that in the copolymer with structure (I), the hydrophobic group is a nonylphenyl radical with the formula C₉H₁₉C₆H₄.

5. A process according to any one of claims 1 to 4, characterized in that the hydrophobic units in the water-soluble copolymer represent 0.5% to 70% by weight of said copolymer.

6. A process according to any one of claims 1 to 5, characterized in that said copolymer is incorporated into said fluid at a concentration of 0.05% to 5% by weight with respect to the water present.

7. A process according to claim 6, characterized in that said concentration is 0.25% to 2% by weight with respect to the water present.

8. A process according to any one of claims 1 to 7, characterized in that in said fluid, said gas comprises at least one hydrocarbon selected from methane, ethane, ethylene, propane, propene, n-butane, isobutane, and possibly H₂S and/or CO₂.

9. A process according to any one of claims 1 to 7, characterized in that said fluid comprises natural gas.

10. A process according to any one of claims 1 to 7, characterized in that said fluid comprises petroleum gas and at least one liquid hydrocarbon.

## Patentansprüche

1. Verfahren zum Inhibieren der Bildung, des Wachstums und/oder der Ansammlung von Hydraten innerhalb eines Fluids, das wenigstens Wasser und ein Gas umfasst, unter thermodynamischen Bedingungen derart, dass sich Hydrate ausgehend von Wasser und Gas bilden können, in dem man diesem Fluid wenigstens ein Additiv inkorporiert, das unter den wasserlöslichen Copolymeren gewählt ist, dadurch gekennzeichnet, dass dieses wasserlösliche Copolymer hydrophile Motive und hydrophobe Motive enthält und gewählt ist unter
- den Polymeren der Struktur
Hb-A-hydrophile Kette-A-Hb (I)
in der
- die hydrophile Kette aus einer Polyoxyalkylenekette gebildet ist mit der allgemeinen Formel: 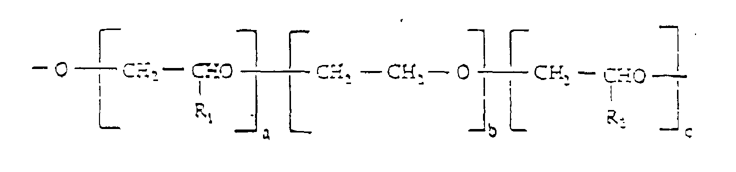 wo R₁ und R₂ jedes ein Wasserstoffatom oder ein Alkylradikal von 1 bis 30 Kohlenstoffatomen ist, a und c jeweils einen Wert von 0 bis 50 annehmen, b kleiner oder gleich 750 ist, wobei a+b+c nicht null ist und b genügend hoch ist, damit das Copolymer wasserlöslich ist;
- die hydrophoben Gruppen (Hb) Alkyl-, Alkyl-Aryl- oder Cycloalkylradikale sind;
- und die hydrophoben Gruppen (Hb) mit der hydrophilen Kette durch A-Gruppierungen verbunden sind, die wenigstens eine Urethanfunktion einschließen.
- den Copolymeren der Struktur (II) vom Typ (Hb)-(Hy) mit einer statistischen Verteilung der hydrophilen Motive (Hy) und der hydrophoben Motive (Hb), in der
- die hydrophilen Motive (Hy) der allgemeinen Formel entsprechen: 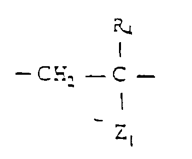 in der R₄ ein Wasserstoffatom oder ein Meythylradikal und Z₁ eine -CONH₂ Gruppierung darstellt;
- und die hydrophoben Motive (Hb) der allgemeinen Formel entsprechen: 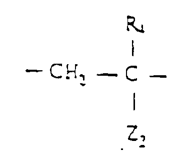 in der R₄ ein Wasserstoffatom oder ein Meythylradikal und Z₂ COR' 1, CONHR'₁ oder CONR'₁R'₂ mit R'₁ und R'₂ jeweils ein Alkylradikal mit 2 bis 30 Kohlenstoffatomen, Aryl- oder Alkyl-Aryl-Radikal mit 6 bis 30 Kohlenstoffatomen darstellt.
- den Copolymeren der Struktur (III) vom Typ (Hb)-(Hy) mit einer statistischen Verteilung der hydrophilen Motive (Hy) und der hydrophoben Motive (Hb) und der allgemeinen Formel entsprechend: 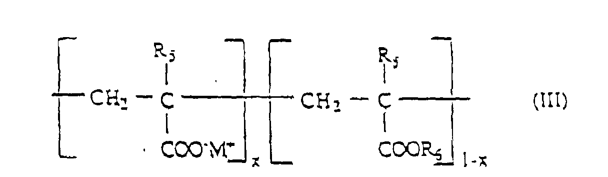 in der R₅ ein Wasserstoffatom oder ein Meythylradikal darstellt, M⁺ ein Proton H⁺ oder ein Alkalimetallkation oder Ammonium ist, R₆ ein Alkylradikal von 2 bis 6 Kohlenstoffatomen ist und x einen Wert von 0,4 bis 0,8 annimmt;
- und den Copolymeren der Struktur (IV) vom Typ (Hy)-(Hb) mit einer statistischen Verteilung der hydrophilen Motive (Hy) und der hydrophoben Motive (Hb) und in der
- die hydrophilen Motive (Hy) allgemeinen Formel entsprechen: 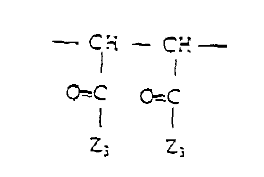 in der Z₃ eine OH Gruppe oder eine Monoetherkette von Polyoxyethylen darstellt;
- und die hydrophoben Motive wenigstens einer der allgemeinen Formeln entsprechen: 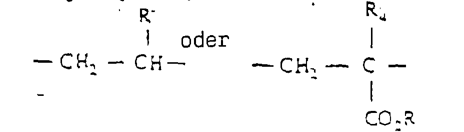 in denen R ein Kohlenwasserstoffalkylradikal von 1 bis 30 Kohlenstoffatomen darstellt und R₄ ein Wasserstoffatom oder ein Meythylradikal darstellt.

2. Verfahren nach Anspruch 1, **dadurch gekennzeichnet,** dass in den Copolymeren der Struktur (I) der Gehalt an Ethylenoxid wenigstens 20 Masse-% ist.

3. Verfahren nach einem der Ansprüche 1 und 2, **dadurch gekennzeichnet,** dass in den Copolymeren der Struktur (I) die A-Gruppierungen mit Urethanfunktionen der Form sind: 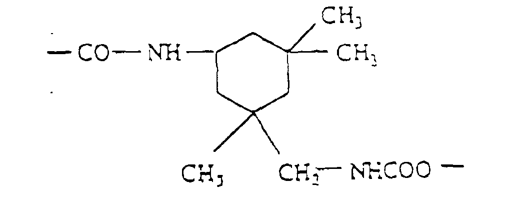
―CO―NH―(CH₂)₆ ―NH―COO―
oder

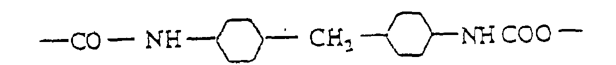

4. Verfahren nach einem der Ansprüche 1 bis 3, **dadurch gekennzeichnet,** dass in den Copolymeren der Struktur (I) die hydrophobe Gruppierung ein Nonylphenylradikal der Formel C₉H₁₉-C₆H₄ ist.

5. Verfahren nach einem der Ansprüche 1 bis 4, **dadurch gekennzeichnet,** dass in dem wasserlöslichen Copolymer die hydrophoben Motive 0,5 bis 70% an Masse dieses Copolymers darstellen.

6. Verfahren nach einem der Ansprüche 1 bis 5, **dadurch gekennzeichnet,** dass dieses Copolymer in dem Fluid bei einer Konzentration von 0,05 bis 5 Masse-% bezüglich des vorhandenen Wassers inkorporiert ist.

7. Verfahren nach Anspruch 6, **dadurch gekennzeichnet,** dass diese Konzentration von 0,25 bis 2 Masse-% bezüglich des vorhandenen Wassers ist.

8. Verfahren nach einem der Ansprüche 1 bis 7, **dadurch gekennzeichnet,** dass das Gas in dem Fluid wenigstens einen Kohlenwasserstoff, der unter Methan, Ethan, Ethylen, Propan, Propen, n-Butan und Isobutan gewählt ist, und gegebenenfalls H₂S und/oder CO₂ umfasst.

9. Verfahren nach einem der Ansprüche 1 bis 7, **dadurch gekennzeichnet,** dass das Fluid Naturgas umfasst.

10. Verfahren nach einem der Ansprüche 1 bis 7, **dadurch gekennzeichnet,** dass das Fluid Erdölgas und wenigstens einen flüssigen Kohlenwasserstoff umfasst.
